(19) Europäisches Patentamt
European Patent Office
Office européen des brevets

(11) **EP 2 765 043 A1**

(12) **EUROPEAN PATENT APPLICATION**
published in accordance with Art. 153(4) EPC

(43) Date of publication:
**13.08.2014 Bulletin 2014/33**

(51) Int Cl.:
*B60W 10/08* (2006.01)          *B60K 6/445* (2007.10)
*B60W 20/00* (2006.01)

(21) Application number: **11873580.2**

(22) Date of filing: **06.10.2011**

(86) International application number:
**PCT/JP2011/073141**

(87) International publication number:
**WO 2013/051143 (11.04.2013 Gazette 2013/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(71) Applicant: **Toyota Jidosha Kabushiki Kaisha
Toyota-shi, Aichi 471-8571 (JP)**

(72) Inventors:
• **HARADA Taku
Toyota-shi
Aichi 471-8571 (JP)**

• **ITO Masatoshi
Toyota-shi
Aichi 471-8571 (JP)**

(74) Representative: **TBK
Bavariaring 4-6
80336 München (DE)**

(54) **HYBRID VEHICLE CONTROL DEVICE**

(57)     An objective of the present invention is to alleviate or avoid promoting rattle and improve fuel consumption when using feedback control on the operation state of a first electric motor on the basis of the rotational velocity of a second electric motor. The degree of change of the operation state of the first electric motor (MG1) in the feedback control is made smaller when the second electric motor torque ($T_{M2}$) is in a rattle occurrence region (G) than when the second electric motor torque ($T_{M2}$) is outside the rattle occurrence region (G), allowing alleviating or avoiding promoting rattle in the feedback control in which a rotational fluctuation of the second electric motor (MG2) is reflected in the operation state of the first electric motor (MG1).

FIG.4

START

SA10  ENGINE PLACED IN A LOADED STATE ?  NO

YES

SA20  $| T_{M2} | \leqq A \text{ [Nm]}$ ?  NO

YES

SA30  HEAVY FILTERING OF $N_{M2}$ USED FOR CALCULATION OF TARGET VALUE OF $N_{M1}$

SA40  NORMAL FILTERING OF $N_{M2}$ USED FOR CALCULATION OF TARGET VALUE OF $N_{M1}$

RETURN

EP 2 765 043 A1

**Description**

TECHNICAL FIELD

The present invention relates to a control device for a hybrid vehicle provided with an electrically controlled differential portion of a power distributing type, and more particularly to techniques for reducing a rattling noise of the electrically controlled differential portion due to a pulsation of a rotary motion of an engine.

BACKGROUND ART

There is well known a hybrid vehicle provided with an electrically controlled differential portion which has a differential mechanism configured to distribute a drive force of an engine to a first electric motor and an output rotary element, and a second electric motor operatively connected to the output rotary element (either directly, or indirectly via a gear mechanism such as a differential gear device), and in which a differential state of the differential mechanism is controlled by controlling an operating state of the first electric motor. Patent Document 1 discloses an example of such a hybrid vehicle.

The hybrid vehicle constructed as described above may suffer from generation of a rattling noise in a gear mechanism of the electrically controlled differential portion, for instance. Described more specifically, the above-indicated gear mechanism has a gap (backlash or play) between mutually engaging portions of its mutually meshing gears. When an output torque of the second electric motor acting on the mutually engaging portions of the meshing gears is relatively small with respect to a pulsation of a torque (explosion torque pulsation) of the engine transmitted to those mutually engaging portions (when the second electric motor is placed in a floating state with its output torque [Nm] being zero or substantially zero, for example), a given pair of meshing gears which normally receives the output torque of the second electric motor are placed in a substantially floating state in which the teeth of the meshing gears are forced against each other with a relatively small force. In such a state, if a pulsation of the rotary motion of the engine due to a pulsation of its torque is transmitted to the mutually engaging portion of the pair of meshing gears, the tooth surfaces of the mutually engaging portions may repeat intermittent mutually abutting actions, resulting in generation of a teeth butting noise, namely, a so-called "rattling noise". To reduce this rattling noise, the above-indicated Patent Document 1 discloses a technique to reduce or prevent the torque pulsation of the engine by raising an operating speed of the engine above a predetermined value while reducing the torque of the engine below a predetermined value, such that an output power of the engine is maintained, when a condition for generation of the rattling noise is detected with the output torque of the second electric motor being held within a predetermined critical range. That is, in a normal condition, the engine is controlled to be operated along a predetermined operation line (for instance, along a highest fuel economy line), with a highest degree of its operating efficiency and with a smooth change of its operating state (its operating point as represented by its speed and torque) according to a change of a required engine power. If the above-indicated condition for generation of the rattling noise is detected, on the other hand, the engine speed is raised above the predetermined value, to shift the operating point of the engine along an iso-power line from the highest fuel economy line to an operation line predetermined for preventing the generation of the rattling noise (that is, to a rattling noise preventing operation line).

PRIOR ART DOCUMENT

Patent Document

Patent Document 1: JP-11-93725 A1

SUMMARY OF THE INVENTION

Object Achieved By The Invention

By the way, the above-described electrically controlled differential portion is configured such that a target value of an operating speed of the first electric motor used to control the operating speed of the engine to a target value at a target engine operating point is determined on the basis of a rotating speed of the output rotary element calculated on the basis of an operating speed of the second electric motor, for example. Output torque of the first electric motor is controlled on the basis of a difference between the determined target value and an actual value of the operating speed of the first electric motor. Namely, the differential state of the differential mechanism is controlled by feedback controlling the operating state of the first electric motor on the basis of the operating speed of the second electric motor. Accordingly, when the output torque of the second electric motor is held within the predetermined critical range in which the rattling noise is likely to be generated, the operating speed of the second electric motor is changed according to the rotary motion pulsation of the engine, to change the output torque of the first electric motor according to a change of the operating speed of the second electric motor (that is, with the same period as the rotary motion pulsation of the second electric motor). The above-indicated electrically controlled differential portion is configured such that as a result of the change of the operating speed of the second electric motor without an actual change of the rotating speed of the output rotary element, the change of the output torque of the first electric motor in the feedback control causes shaft torque of the output rotary element to change with the same period as the rotary motion pulsation of the second electric motor. Accordingly, the rotary motion pulsation of the second electric motor is boosted by the torque pulsation of the output rotary element, giving rise to a risk of increase of the rattling noise. Where the control to avoid the rattling noise is implemented in view of the above-indicated risk of increase of the rattling noise (where the feedback control is implemented to shift the operating point of the engine such that the output power of the engine is maintained from a point on the highest engine fuel economy line to a point on the rattling noise preventing operation line, for instance), there is a risk of deterioration of the fuel economy. In this respect, it is noted that the above-indicated problems of the increase of the rattling noise and the deterioration of the fuel economy are not publicly known, and that there has never been any proposal to reduce or prevent the increase of the rattling noise upon the feedback control of the output torque of the first electric motor on the basis of the operating speed of the second electric motor.

The present invention was made in view of the background art described above. It is therefore an object of the present invention to provide a control device for a hybrid vehicle, which permits reduction or prevention of the increase of the above-described rattling noise and improvement of the fuel efficiency upon the feedback control of the operating state of the first electric motor on the basis of the operating speed of the second electric motor.

Means For Achieving The Object

The object indicated above is achieved according to a first aspect of the present invention, which provides a control device for (a) a hybrid vehicle provided with an electrically controlled differential portion which has a differential mechanism configured to distribute a drive force of an engine to a first electric motor and an output rotary element, and a second electric motor operatively connected to the output rotary element, and a differential state of the differential mechanism being controlled by a feedback control of an operating state of the first electric motor on the basis of an operating speed of the second electric motor, (b) the control device being characterized by reducing a degree of change of the operating state of the above-described first electric motor in the above-described feedback control where an output torque of the above-described second electric motor is held within a zone predetermined as a range of the output torque of the second electric motor, as compared with a degree of change where the output torque of the second electric motor is outside the zone.

Advantages Of The Invention

According to the first aspect of the invention described above, it is possible to reduce or prevent an increase of a teeth butting noise (a rattling noise) by the above-indicated feedback control in which a rotary motion pulsation of the second electric motor is reflected on the operating state of the first electric motor. Accordingly, an amount of shifting of the engine operating point from the highest fuel economy line for reducing the teeth butting noise can be reduced, as compared with the amount of shifting where the above-indicated control is not implemented. Namely, the engine operating point for reducing the teeth butting noise can be set closer to the highest fuel economy line. Thus, the feedback control of the operating state of the first electric motor on the basis of the operating speed of the second electric motor can be implemented such that the increase of the rattling noise is reduced or prevented while the fuel economy is improved.

According to a second aspect of this invention, the control device according to the above-described first aspect of the invention is configured such that the degree of change of the operating state of the above-described first electric motor in the above-described feedback control is reduced by at least one of: reducing a gain used for the above-described feedback control; implementing a heavier filtering operation with respect to the operating speed of the above-described second electric motor; and implementing the above-described feedback control on the basis of a value relating to a rotating speed of the above-described output rotary element, in place of the operating speed of the above-described second electric motor. According to this second aspect, the degree of change of the operating state of the above-described first electric motor in the above-described feedback control can be stably reduced, so that the increase of the teeth butting noise (rattling noise) can be more stably reduced or prevented.

According to a third aspect of the invention, the control device according to the above-described first or second aspect of the invention is configured to implement a teeth butting noise preventing control to shift an operating point of the engine, where the output torque of the above-described second electric motor is held within the above-described zone, from a predetermined point to be set where the output torque of the above-described second electric motor is outside the zone, to a predetermined teeth butting noise preventing operating point to be set for preventing a teeth butting noise. According to this third aspect, the teeth butting noise preventing control is implemented while the degree of change of the operating state of the first electric motor in the above-described feedback control is reduced, so that the above-described predetermined teeth butting noise preventing operating point of the engine can be set closer to the predetermined operating point of the engine, whereby the fuel economy can be improved. Accordingly, the amount of change of the engine speed during prevention of the teeth butting noise can be reduced, and a degree of uneasiness felt by a vehicle user (vehicle operator) about the change of the engine speed can be reduced.

According to a fourth aspect of the invention, the control device according to the above-described third aspect of the invention is configured such that the above-described predetermined operating point of the engine is a point which lies on a memory-stored predetermined highest fuel economy line and at which a target value of power of the engine can be obtained, while the above-described predetermined teeth butting noise preventing operating point of the engine is a point which lies on a memory-stored predetermined teeth butting noise preventing operation line to prevent generation of the above-described teeth butting noise and at which the target value of power of the engine can be obtained. According this fourth aspect, the rattling noise preventing control is implemented while the degree of change of the operating state of the first electric motor in the above-described feedback control is reduced, so that the above-described predetermined rattling noise preventing operating point can be set close to the highest fuel economy line, whereby the fuel economy can be improved.

According to a fifth aspect of the invention, the control device according to any one of the above-described first through fourth aspects of the invention is configured such that the above-described zone is a teeth butting noise generation zone in which a teeth butting noise is likely to be generated in the above-described electrically controlled differential portion due to a rotary motion pulsation of the above-described engine and defined as a range of the output torque of the second electric motor. According to this fifth aspect, it is possible to stably reduce or prevent the increase of the teeth butting noise (rattling noise) by the above-described feedback control in which the rotary motion pulsation of the second electric motor is reflected on the operating state of the first electric motor.

BRIEF DESCRIPTION OF THE DRAWINGS

Fig. 1 is a schematic view for explaining an arrangement of a vehicle to which the present invention is suitably applicable, and a block diagram for explaining major portions of a control system provided for the vehicle;

Fig. 2 is a functional block diagram for explaining major control functions of an electronic control device;

Fig. 3 is a view indicating examples of the highest fuel economy line and the rattling noise preventing operation line of the engine;

Fig. 4 is a flow chart illustrating a major control operation of the electronic control device, that is, a control operation to reduce or prevent an increase of a rattling noise for improving the fuel economy, which is performed for the feedback control of the operating state of the first electric motor on the basis of the operating speed of the second electric motor;

Fig. 5 is a flow chart illustrating a major control operation of the electronic control device, that is, a control operation according to another example of the invention different from the example of Fig. 4, to reduce or prevent the increase of the rattling noise for improving the fuel economy, which is performed for feedback control of the operating state of the first electric motor on the basis of the operating speed of the second electric motor;

Fig. 6 is a flow chart illustrating a major control operation of the electronic control device, that is, a control operation according to a further example of the invention different from the example of Fig. 4, to reduce or prevent the increase of the rattling noise for improving the fuel economy, which is performed for feedback control of the operating state of the first electric motor on the basis of the operating speed of the second electric motor; and

Fig. 7 is a view showing an example of a hybrid vehicle provided with a power distributing mechanism provided with two planetary gear sets which cooperate to constitute a differential mechanism.

MODE FOR CARRYING OUT THE INVENTION

In one preferred form of the present invention, the above-described second electric motor is operatively connected to the output rotary element of the above-described differential mechanism, either directly or indirectly via a gear mechanism. For example, the above-indicated gear mechanism is constituted by: a pair of gears operatively connecting two shafts; a differential gear device of a planetary gear type or a bevel gear type; a speed reducing or increasing device which is constituted by such a differential gear device and which has a single speed ratio; and one of various types of a multiple-step transmission of a planetary gear type constituted by a plurality of planetary gear sets rotary elements of which are selectively connected to each other by frictional coupling devices, so as to selectively establish a plurality of gear positions (shift positions), for instance, two, three or more gear positions.

Preferably, the frictional coupling devices in the above-indicated multiple-step transmission of the planetary gear type are clutches and brakes of a multiple-disc type or a single-disc type which are placed in their engaged state by hydraulic actuators, or hydraulically operated frictional coupling devices in the form of brakes of a belt type, for instance.

In another preferred form of the invention, the above-described differential mechanism is a device having a first rotary element connected to the above-described engine, a second rotary element connected to the above-described first electric motor, and a third rotary element connected to the above-described output rotary element.

Preferably, the above-indicated differential mechanism is a planetary gear set of a single-pinion type having a carrier serving as the above-indicated first rotary element, a sun gear serving as the above-indicated second rotary element, and a ring gear serving as the above-indicated third rotary element.

In a further preferred form of the invention, the vehicle is of a transverse FF (front-engine front-drive) type in which the above-described vehicular power transmitting device is installed such that the axis of its drive device is parallel to a transverse direction of the vehicle, or of a longitudinal FR (front-engine rear-drive) type in which the vehicular power transmitting device is installed such that the axis of its drive device is parallel to a longitudinal direction of the vehicle.

In a still further preferred form of the invention, the above-described engine and the above-described differential mechanism are operatively connected to each other, and a pulsation absorbing damper (vibration damping device), a direct coupling clutch, a direct coupling clutch provided with a damper, or a fluid-operated power transmitting device, for example, may be interposed between the engine and the differential mechanism, or alternatively the engine and the differential mechanism may be permanently connected to each other. The fluid-operated power transmitting device may be a torque converter provided with a lock-up clutch, or a fluid coupling.

Referring to the drawings, preferred examples of the present invention will be described in detail.

FIRST EXAMPLE

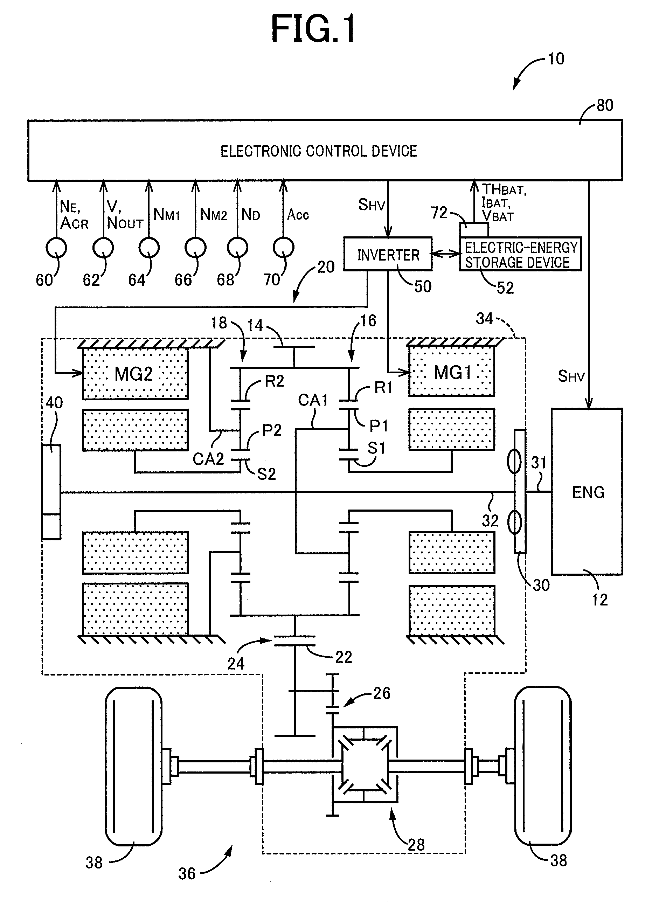

Fig. 1 is the schematic view for explaining an arrangement of a hybrid vehicle 10 (hereinafter referred to simply as a "vehicle 10") to which the present invention is applicable, and a block diagram for explaining major portions of a control system provided for the vehicle 10. As shown in Fig. 1, the vehicle 10 is provided with a transmission portion 20 having: a power distributing mechanism 16 configured to distribute a drive force generated by a vehicle drive power source in the form of an engine 12, to a first electric motor MG1 and an output gear 14; a gear mechanism 18 connected to the output gear 14; and a second electric motor MG2 operatively connected to the output gear 14 through the gear mechanism 18. This transmission portion 20 is suitably used for the vehicle 10 of a transverse FF (front-engine front-drive) type, for example. A part of a power transmitting device 36 which serves as a transaxle (T/A) and which is accommodated in a stationary member in the form of a casing 34 attached to a body of the vehicle 10 is constituted by: a counter gear pair 24 consisting of a counter driven gear 22 and the output gear 14 serving as an output rotary element of the transmission portion 20 (power distributing mechanism 16); a final gear pair 26; a differential gear device (final speed reducing device) 28; a damper 30 operatively connected to the engine 12; and an input shaft 32 operatively connected to the damper 30. In the power transmitting device 36 arranged as described above, the drive force of the engine 12 transmitted to the damper 30 and input shaft 32 and a drive force of the second electric motor MG2 are transmitted to the output gear 14, and further transmitted from the output gear 14 to a pair of drive wheels 38 through the counter gear pair 24, final gear pair 26, differential gear device 28, a pair of axles, etc. in this order of description.

The input shaft 32, which is connected at its one end to the engine 12 through the damper 30, is rotated by the engine 12. An oil pump 40 serving as a lubricant supply device is connected to the other end of the input shaft 32, so that the oil pump 40 is operated by a rotary motion of the input shaft 32, to supply lubricant to various portions of the power transmitting device 36 such as the power distributing mechanism 16, gear mechanism 18, and ball bearings not shown.

The power distributing mechanism 16 is provided with a known planetary gear set of a single-pinion type having rotary elements (rotary members) consisting of: a first sun gear S1; a first pinion gear P1; a first carrier CA1 supporting the first pinion gear P1 such that the first pinion gear P1 is rotatable about its axis and the axis of the planetary gear set; and a first ring gear R1 meshing with the first sun gear S1 through the first pinion gear P1. The power distributing mechanism 16 functions as a differential mechanism configured to perform a differential operation. In this power distributing mechanism 16, the first carrier CA1 serving as a first rotary element RE1 is connected to the input shaft 32, that is, to the engine 12, and the first sun gear S1 serving as a second rotary element RE2 is connected to the first electric motor MG1, while the first ring gear R1 serving as a third rotary element RE3 is connected to the output gear 14, such that the first sun gear S1, first carrier CA1 and first ring gear R1 are rotatable relative to each other, so that an output of the engine 12 is distributed to the first electric motor MG1 and the output gear 14. The first electric motor MG1 is operated with a portion of the output of the engine 12 distributed thereto, to generate an electric energy which is stored in an electric-energy storage device 52 through an inverter 50, or used to operate the second electric motor MG2, so that the transmission portion 20 functions as an electrically controlled continuously variable transmission which is operable in a continuously variable shifting state (electric CVT state) in which a speed ratio $\gamma 0$ thereof (engine speed $N_E$/rotating speed $N_{OUT}$ of the output gear 14) is continuously variable. Namely, the transmission portion 20 functions as an electrically controlled differential portion (electrically controlled continuously variable transmission) and a differential state of the power distributing mechanism 16 is controllable by controlling an operating state of the first electric motor MG1 which functions as a differential electric motor. Accordingly, the transmission portion 20 permits the engine 12 to operate at a highest fuel economy point, which is an operating point of the engine 12 (hereinafter referred to as "engine operating point" defined by the engine speed $N_E$ and an engine torque $T_E$) at which the fuel economy is highest. This type of hybrid vehicle is called a mechanical distribution type or a split type vehicle.

The gear mechanism 18 is provided with a known planetary gear set of a single-pinion type having rotary elements (rotary members) consisting of: a second sun gear S2; a second pinion gear P2; a second carrier CA2 supporting the second pinion gear P2 such that the second pinion gear P2 is rotatable about its axis and the axis of the planetary gear set; and a second ring gear R2 meshing with the second sun gear S2 through the second pinion gear P2. In this gear mechanism 18, a rotary motion of the second carrier CA2 is inhibited when the second carrier CA2 is fixed to the stationary member in the form of the casing 34, and the second sun gear S2 is connected to the second electric motor MG2, while the second ring gear R2 is connected to the output gear 14. The planetary gear set of the gear mechanism 18 has a gear ratio (= number of teeth of the sun gear S2/number of teeth of the second ring gear R2) which is determined so that the gear mechanism 18 functions as a speed reducing device. When the second electric motor MG2 is operated to generate a vehicle driving torque (driving force), the operating speed of the second electric motor MG2 is reduced so that a rotary motion of the second electric motor MG2 is transmitted to the output gear 14 at a reduced speed and with a boosted torque. In this respect, it is noted that the output gear 14 is a one-piece composite gear having functions of the ring gear R1 of the power distributing mechanism 16 and the ring gear R2 of the gear mechanism 18, and a function of the counter drive gear which meshes with the counter driven gear 22 and cooperates with the counter driven gear 22 to constitute the counter gear pair 24.

Each of he first electric motor MG1 and the second electric motor MG2 is a synchronous electric motor having at least one of a function of an electric motor operable to convert an electric energy into a mechanical driving force, and a function of an electric generator operable to convert a mechanical driving force into an electric energy, and is preferably a motor/generator operable selectively as an electric motor or an electric generator. For example, the first electric motor MG1 has a function of an electric generator operable to generate a reaction force with respect to the engine 12, and a function of an electric motor operable to start the engine 12 while the engine 12 is at rest, while the second electric motor MG2 has a function of an electric motor functioning as a vehicle drive power source to generate a vehicle driving force, and a function of an electric generator operable to perform a regenerative operation for converting a reverse driving force received from the drive wheels 38, into an electric energy.

The vehicle 10 is provided with a control device in the form of an electronic control device 80 for controlling the various portions of the vehicle 10 such as the transmission portion 20. The electronic control device 80 includes a so-called microcomputer incorporating a CPU, a RAM, a ROM and an input/output interface. The CPU performs signal processing operations according to programs stored in the ROM while utilizing a temporary data storage function of the RAM, to implement various control operations for the vehicle 10. For instance, the electronic control device 80 implements vehicle control operations including hybrid drive controls of the engine 12, first electric motor MG1 and second electric motor MG2, and is constituted by a plurality of units assigned to control the output of the engine 12 and the outputs of the first and second electric motors MG1 and MG2, as needed. The electronic control device 80 is configured to receive various output signals of various sensors (e.g., a crank position sensor 60, an output speed sensor 62, a first electric motor speed sensor 64 in the form of a resolver, a second electric motor speed sensor 66 in the form of a resolver, a wheel speed sensor 68, an accelerator pedal operation amount sensor 70, a battery sensor 72, etc.) provided on the vehicle 10. Those output signals represent the engine speed $N_E$ and a crank angle (crank position) $A_{CR}$ indicative of a rotary angle (position) of a crankshaft 31, the output speed $N_{OUT}$ which is the rotating speed of the output gear 14 representative of a vehicle running speed V, a first electric motor speed $N_{M1}$, a second electric motor speed $N_{M2}$, rotating speeds $N_D$ of the drive wheels 38, an operation amount Acc of an accelerator pedal, a temperature $TH_{BAT}$, a charging and discharging current $I_{BAT}$ and a voltage $V_{BAT}$ of the electric-energy storage device 52, etc. The electronic control device 80 is further configured to generate various output signals to be supplied to various portions of the vehicle 10 (e.g., engine 12, inverter 50, etc.). Those output signals include hybrid control command signals $S_{HV}$ such as engine control command signals and electric motor control command signals (shift control command signals). The electronic control device 80 is also configured to calculate from time to time an electric energy amount (charging capacity) SOC of the electric-energy storage device 52, on the basis of the battery temperature $TH_{BAT}$, battery charging and discharging current $I_{BAT}$ and battery voltage $V_{BAT}$, etc., for example.

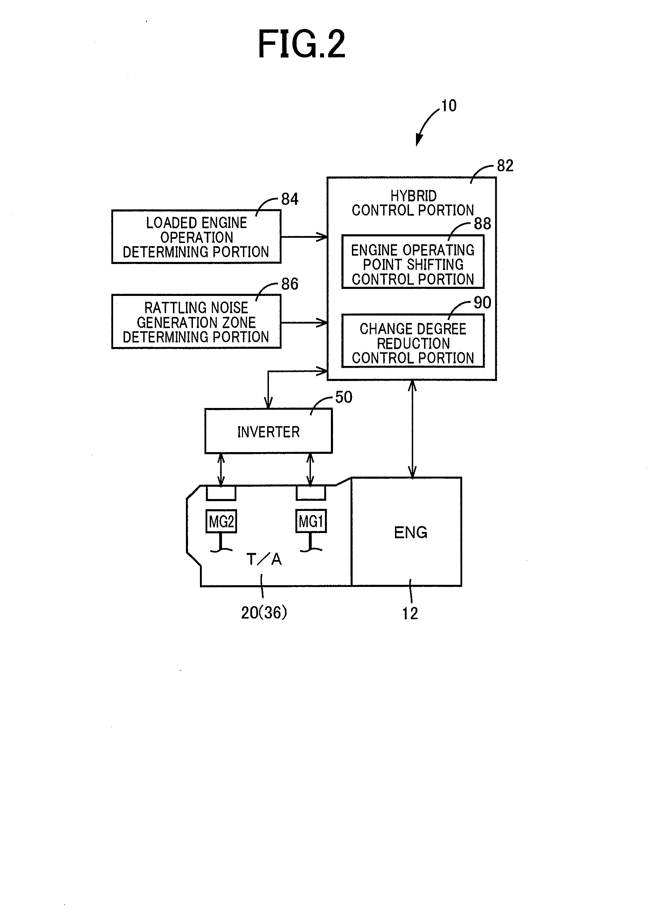

Fig. 2 is a functional block diagram for explaining major control functions of the electronic control device 80. Hybrid control means, namely, a hybrid control portion 82 shown in Fig. 2 selects one of vehicle drive modes according to the vehicle running state. The vehicle drive modes include: a motor drive mode (EV drive mode) in which only the second electric motor MG2 is used as the vehicle drive power source; an engine drive mode (steady-state drive mode) in which at least the engine 12 is used as the vehicle drive power source while the first electric motor MG1 performs a regenerative operation to generate a reaction force corresponding to a drive force of the engine 12 so that the engine torque is transmitted directly to the output gear 14 (drive wheels 22), and so that the second electric motor MG2 is operated with an electric energy generated by the first electric motor MG1, to generate a torque to be transmitted to the output gear 14; and an assisting drive mode (accelerating drive mode) in which a driving force of the second electric motor MG2 operated with the electric energy supplied from the electric-energy storage device 52 is transmitted to the drive wheels 22, in addition to the drive force of the engine 12 as generated in the engine drive mode.

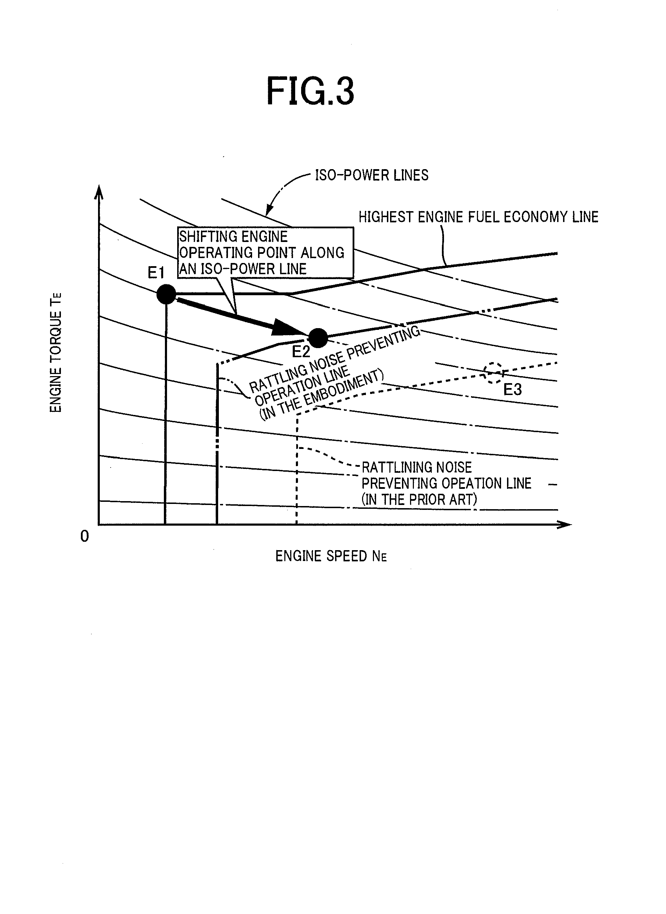

The controls implemented in the above-described engine drive mode will be described in detail, by way of example. The hybrid control portion 82 controls the engine 12 so as to operate in an high-efficiency operating region, and controls the speed ratio $\gamma0$ of the transmission portion 20 so as to optimize the distribution of the driving forces of the engine 12 and the second electric motor MG2, and the reaction force generated by the regenerative operation of the first electric motor MG1. For instance, the hybrid control portion 82 calculates a target output (a required output) of the vehicle 10 on the basis of the accelerator pedal operation amount Acc and the vehicle running speed V, and calculates a required total target output on the basis of the calculated target output and a required amount of charging of the electric-energy storage device (a required amount of power for charging the electric-energy storage device). The hybrid control portion 82 calculates a target engine power $P_E{}^*$ so as to obtain the calculated total target output, while taking account of a power transmission loss, a load acting on each optionally installed device, and an assisting torque to be generated by the second electric motor MG2. Further, the hybrid control portion 82 controls the engine 12 and the amount of generation of the electric energy by the first electric motor MG1, such that the engine speed $N_E$ and the engine torque $T_E$ correspond to an engine operating point (e.g., an engine operating point E1 indicated in Fig. 3) which lies on a memory-stored predetermined highest engine fuel economy line indicated by a solid line in Fig. 3 and obtained by experimentation so as to assure a good compromise between the vehicle drivability and the fuel economy and at which the above-indicated target engine power $P_E{}^*$ can be obtained. It is noted that the fuel economy referred to with respect to the present example is represented by a vehicle running distance per unit amount of consumption of the fuel, or an overall fuel consumption ratio of the vehicle (= amount of consumption of the fuel/output of the drive wheels).

The hybrid control portion 82 generates engine control command signals for implementing: a throttle valve control by commanding a throttle actuator to open and close an electronic throttle valve; a fuel injection control by controlling a fuel injecting device to control an amount and timing of injection of the fuel; and an ignition timing control by controlling an igniting device to control the timing of ignition of the engine. Thus, the hybrid control portion 82 implements output controls of the engine 12 so as to obtain a target value of the engine torque $T_E$ for generating the target engine power $P_E{}^*$. Further, the hybrid control portion 82 generates an electric motor control command signal to be applied to the inverter 50 for controlling the amount of generation of the electric energy by the first electric motor MG1, namely, implements a feedback control of the operating state of the first electric motor MG1 so as to obtain a target value of the engine speed $N_E$ (target engine speed $N_E{}^*$) for generating the target engine power $P_E{}^*$.

For example, the hybrid control portion 82 implements the above-indicated feedback control such that the engine speed $N_E$ coincides with the target engine speed value $N_E{}^*$, by determining an output torque of the first electric motor MG1 (first electric motor torque $T_{M1}$) according to the following equation (1). In this equation (1), the first term of the right member represents the reaction torque required for transmitting the engine torque $T_E$ to the drive wheels 34, and the second and third terms of the right member represent respective feedback torque values for converging the engine speed $N_E$ into the target engine speed value $N_E{}^*$. Further, "KP" represents a proportional gain, and "KI" represents an integral gain. These proportional gain KP and integral gain KI are obtained by experimentation and stored in a memory, so as to assure a good compromise between degrees of response and stability of the above-indicated feedback torque values. Further, "$\Delta N_{M1}$" represents a difference (= $N_{M1}{}^* - N_{M1}$) between a target value (target M1 speed $N_{M1}{}^*$) and an actual value (actual M1 speed $N_{M1}$) of the first electric motor speed $N_{M1}$.

$$T_{M1}(i) = T_{M1}(i-1) + KP \times \Delta N_{M1} + KI \times \int \Delta N_{M1} dt \ldots\ldots\ldots (1)$$

The above-indicated target M1 speed $N_{M1}{}^*$ will be described. Initially, the hybrid control portion 82 calculates a filtered value of the second electric motor speed $N_{M2}$ (filtered M2 speed $N_{M2}F$) by implementing a moving average or other predetermined filtering operation with respect to a control value (control M2 speed $N_{M2}A$) which is a value obtained by a predetermined smoothing operation implemented with respect to the second electric motor speed $N_{M2}$ detected by the second electric motor speed sensor 66. Then, the hybrid control portion 82 converts the filtered M2 speed $N_{M2}F$ into a rotating speed of the output gear 14 (converted output speed $N_{OUT}$), on the basis of the filtered M2 speed $N_{M2}F$ and the gear ratio of the gear mechanism 18. Further, the hybrid control portion 82 calculates the target M1 speed $N_{M1}{}^*$ on the basis of the above-indicated converted output speed $N_{OUT}$ and the target engine speed $N_E{}^*$, and according to a relationship among the three rotary elements of the power distributing mechanism 16. Thus, the present example is configured to calculate the target M1 speed $N_{M1}{}^*$ on the basis of the second electric motor speed $N_{M2}$, namely, to implement the feedback control of the operating state of the first electric motor MG1 on the basis of the second electric motor speed $N_{M2}$.

It is considered possible to use a value relating to the rotating speed of the output gear 14, in place of the second electric motor speed $N_{M2}$, for calculating the above-indicated target M1 speed $N_{M1}^*$. However, as compared with the second electric motor speed $N_{M2}$, this value relating to the rotating speed of the output gear 14 is more likely to be influenced by a vehicle braking operation and a surface condition of a roadway, and more likely to have a noise, particularly during running of the vehicle at a comparatively high speed. For this reason, the present example is configured to calculate the target M1 speed $N_{M1}^*$ on the basis of the second electric motor speed $N_{M2}$. For example, the above-indicated value relating to the rotating speed of the output gear 14 is the output speed $N_{OUT}$ detected by the output speed sensor 62, the wheel speeds $N_D$ detected by the wheel speed sensor 68, or a rotating speed of any rotary member in a power transmitting path from the output gear 14 to the drive wheels 38. It is to be understood that the output speed $N_{OUT}$ referred to below also means the value relating to the rotating speed of the output gear 14.

When the second electric motor MG2 in the power transmitting device 36 according to the present example is placed in a non-loaded or substantially non-loaded state (that is, when an output torque [Nm] of the second electric motor MG2, namely, the second electric motor torque $T_{M2}$ is zero or substantially zero), the mutually meshing gears of the gear mechanism 18 connected to the second electric motor MG2 are placed in a floating state in which the teeth of the meshing gears are forced against each other with a relatively small force. If an exposition torque pulsation of the engine 12 (engine explosion torque pulsation or engine rotary motion pulsation) which is larger than the force acting on the meshing gears is transmitted to the gear mechanism 18 in the floating state of the meshing gears in the engine drive mode, there is a risk of generation of a teeth butting noise, namely, a so-called "rattling noise". That is, the gear mechanism 18 may generate the rattling noise in the engine drive mode, if the second electric motor torque $T_{M2}$ acting on the mutually engaging portions of the meshing gears is relatively small with respect to the torque pulsation of the engine 12 transmitted to the mutually engaging portions. In this example, a range of the second electric motor torque $T_{M2}$ in which the rattling noise may be generated is referred to as a rattling noise generation zone (teeth butting noise generation zone) G. This rattling noise generation zone G is a torque range which is predetermined by experimentation as a range of the second electric motor torque $T_{M2}$ in which the rattling noise is likely to be generated due to the rotary motion pulsation of the engine 12, in the transmission portion 20 (for instance, at the mutually engaging portions of the mutually meshing gears of the transmission portion 20, in particular, at the mutually engaging portions of the mutually meshing gears of the gear mechanism 18). The rattling noise generation zone G is defined by and between a negative side threshold value (-A)[Nm] and a positive side threshold value (A)[Nm] of the rattling noise generation (where A > 0). In other words, this rattling noise generation zone G corresponds to a running state of the vehicle in the floating state of the second electric motor MG2 in which the second electric motor torque $T_{M2}$ is substantially zero, for example.

To deal with the generation of the above-indicated rattling noise, it is considered possible to implement a teeth butting noise preventing control (rattling noise preventing control) when the second electric motor torque $T_{M2}$ is in the rattling noise generation zone G. This rattling noise preventing control is implemented to shift the engine operating point from a predetermined point to be set during a normal running of the vehicle when the second electric motor torque $T_{M2}$ is outside the rattling noise generation zone G, for instance, from an engine operating point (for example, an engine operating point E1 indicated in Fig. 3) which lies on a highest engine fuel economy line indicated by a solid line in Fig. 3 and on which the target engine power $P_E^*$ can be obtained, to a predetermined teeth butting noise preventing operating point (rattling noise preventing operating point) to be set for preventing the generation of the above-indicated rattling noise, for instance, an engine operating point (for example, an engine operating point E3 indicated in Fig. 3) which lies on a memory-stored predetermined butting noise preventing operation line (rattling noise preventing operation line) indicated by a broken line in Fig. 3 and obtained by experimentation to prevent the generation of the above-indicated rattling noise and on which the target engine power $P_E^*$ can be obtained. When the engine operating point lies on this rattling noise preventing operation line, the engine speed $N_E$ is higher and the engine torque $T_E$ is smaller than when the engine operating point lies on the highest engine fuel economy line. Accordingly, the rattling noise preventing control permits reduction or prevention of the rattling noise by reducing the torque pulsation of the engine 12 while maintaining the same target engine power $P_E^*$.

By the way, the present example is configured to calculate the target M1 speed $N_{M1}^*$ on the basis of the second electric motor speed $N_{M2}$, and implement the feedback control of the operating state of the first electric motor MG1. Accordingly, when the second electric motor torque $T_{M2}$ is held within the rattling noise generation zone G, the target M1 speed $N_{M1}^*$ is changed due to the rotary motion pulsation of the second electric motor MG2 due to the rotary motion pulsation of the engine 12, with the same period as the rotary motion pulsation of the second electric motor MG2, and thus, the first electric motor torque $T_{M1}$ is changed. The power distributing mechanism 16 is configured such that as a result of the change of the target M1 speed $N_{M1}^*$ without an actual change of the rotating speed of the output gear 14, the change of the first electric motor torque $T_{M1}$ in the feedback control causes the shaft torque of the output gear 14 to change with the same period as the rotary motion pulsation of the second electric motor MG2. Accordingly, the rotary motion pulsation of the second electric motor MG2 is boosted by the torque pulsation of the output gear 14, giving rise to a risk of increase of the rattling noise. Where the control to avoid the rattling noise is implemented in view of the above-indicated risk of increase of the rattling noise (in other words, where the rattling noise preventing operation line is set in view of the risk of increase of the rattling noise), there is a risk of deterioration of the fuel economy.

In view of the above-described drawback, the electronic control device 80 according to the present example is configured to reduce or prevent the increase of the rattling noise as a result of the above-indicated feedback control, by reducing a degree of change of the operating state of the first electric motor MG1 in the feedback control where the second electric motor torque $T_{M2}$ is held within the rattling noise generation zone G, as compared with a degree of change where the second electric motor torque $T_{M2}$ is outside the rattling noise generation zone G. Namely, the present example is configured to reduce the degree of reflection of the rotary motion pulsation of the second electric motor MG2 on the operating state of the first electric motor MG1, more specifically, on the first electric motor torque $T_{M1}$, in the above-indicated feedback control. That is, an influence of the rotary motion pulsation of the second electric motor MG2 is reduced in the calculation of the first electric motor torque $T_{M1}$ in the above-indicated feedback control. Accordingly, the increase of the rattling noise by the above-indicated feedback control is reduced or prevented, so that the rattling noise preventing operation line can be set closer to the highest engine fuel economy line, as indicated by a two-dot chain line in Fig. 3, than where the degree of change of the operating state of the first electric motor MG1 in the above-indicated feedback control is not reduced. Thus, the fuel economy can be improved. Accordingly, the amount of change of the engine speed $N_E$ can be reduced upon implementation of the rattling noise preventing control, by setting the above-indicated rattling noise preventing operating point of the engine at a point close to the corresponding engine operating point lying on the highest engine fuel economy line, for instance, at an engine operating point E2 indicated in Fig. 3. Accordingly, it is possible to reduce the degree of uneasiness felt by the vehicle user (vehicle operator) about the change of the engine speed $N_E$.

Described more specifically referring back to Fig. 2, loaded engine operation determining means, namely, a loaded engine operation determining portion 84 is provided to determine whether the engine 12 is placed in a loaded state. For example, this determination is made by determining whether the first electric motor MG1 is performing a regenerative operation while generating a reaction torque with respect to the engine torque $T_E$. In this respect, it is noted that an idling operation of the engine 12 by itself while the first electric motor MG1 is placed in a free state is clearly distinguished from the loaded state.

Rattling noise generation zone determining means, namely, a rattling noise generation zone determining portion 86 is provided to determine whether the second electric motor torque $T_{M2}$ is held within the rattling noise generation zone G. Described more specifically, the rattling noise generation zone determining portion 86 is configured to determine whether an absolute value ($|T_{M2}|$) of the electric motor control command value applied from the hybrid control portion 82 to the second electric motor MG2 is equal to or smaller than the above-indicated rattling noise generation threshold value (A)[Nm] corresponding to the rattling noise generation zone G.

The hybrid control portion 82 is functionally provided with engine operating point shifting control means, namely, an engine operating point shifting control portion 88, which is configured to implement the above-indicated rattling noise preventing control for shifting the engine operating point from the highest engine fuel economy line to the rattling noise preventing operation line, when the rattling noise generation zone determining portion 86 determines that the second electric motor torque $T_{M2}$ is held within the rattling noise generation zone G. For instance, the engine operating point shifting control portion 88 shifts the engine operating point from the highest engine fuel economy line (indicated by the solid line in Fig. 3 by way of example) to the rattling noise preventing operation line (indicated by the two-dot chain line in Fig. 3 by way of example) while maintaining the same target engine power $P_E^*$. Described more specifically, the engine operating point shifting control portion 88 controls the first electric motor MG1 to raise the engine speed $N_E$ to a value corresponding to the rattling noise preventing engine operating point (for instance, the operating point E2 indicated in Fig. 3), and at the same time controls the throttle valve opening angle to reduce the engine torque $T_E$ to a value corresponding to the rattling noise preventing engine operating point, for thereby reducing or preventing the rattling noise.

The hybrid control portion 82 is further functionally provided with change degree reduction control means, namely, a change degree reduction control portion 90, which is configured to reduce the degree of change of the operating state of the first electric motor MG1 in the above-indicated feedback control, as compared with the degree of change during the normal running of the vehicle, when the rattling noise generation zone determining portion 86 determines that the second electric motor torque $T_{M2}$ is held within the rattling noise generation zone G (in other words, while the engine operating point shifting control portion 88 is implementing the rattling noise preventing control). The change degree reduction control portion 90 implements a predetermined heavier filtering operation with respect to the above-indicated control M2 speed $N_{M2}A$ used for calculation of the filtered M2 speed $N_{M2}F$, as compared with a predetermined filtering operation to be implemented during the normal running of the vehicle, so that the degree of change of the operating state of the first electric motor MG1 in the above-indicated feedback control is reduced as compared with that during the normal running of the vehicle. For example, the change degree reduction control portion 90 implements the heavier filtering operation as compared with the normal filtering, by using a longer time period T as compared with a time period during the normal running of the vehicle, when a moving average calculation is performed as the predetermined filtering operation.

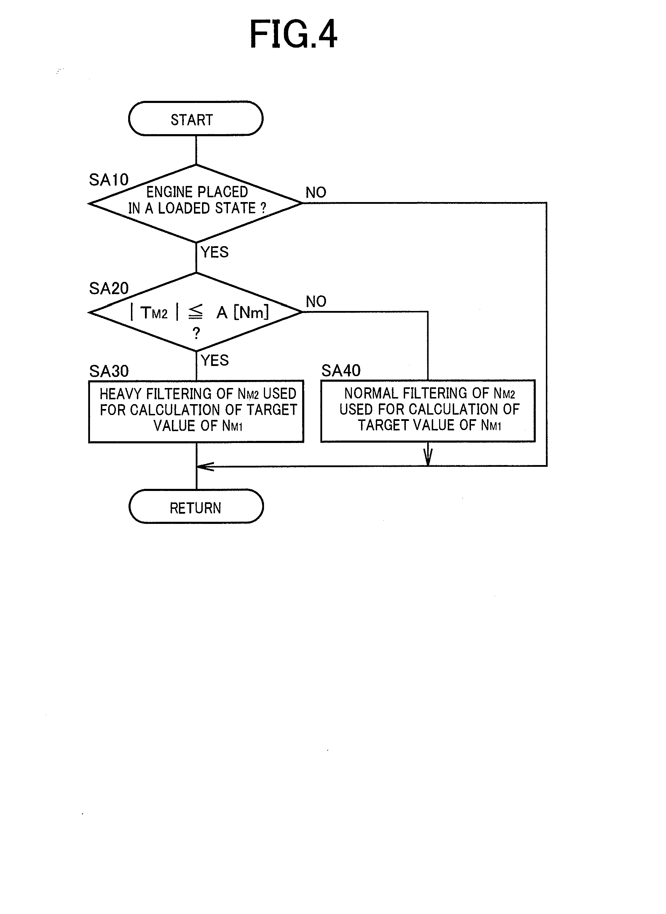

Fig. 4 is the flow chart illustrating a major control operation of the electronic control device 80, that is, a control operation to reduce or prevent the increase of the rattling noise for improving the fuel economy, which is performed for feedback control of the operating state of the first electric motor MG1 on the basis of the second electric motor speed $N_{M2}$. This control routine is repeatedly executed with an extremely short cycle time of about several milliseconds to about several tens of milliseconds.

The control operation illustrated in Fig. 4 is initiated with step SA10 (hereinafter "step" being omitted) corresponding to the loaded engine operation determining portion 84, to determine whether the engine 12 is placed in a loaded state. If a negative determination is obtained in SA10, the present control routine is terminated. Namely, if the vehicle is running in the motor drive mode, or if the engine 12 is operated by itself, the following steps to perform a special control according to the present invention will not be implemented. If an affirmative determination is obtained in SA10, the control flow goes to SA20 corresponding to the rattling noise generation zone determining portion 86, to determine whether the second electric motor torque $T_{M2}$ is equal to or smaller than the rattling noise generation threshold value (A)[Nm] of the rattling noise generation zone G. If an affirmative determination is obtained in SA20, the control flow goes to SA30 corresponding to the hybrid control portion 82 (engine operating point shifting control portion 88, and change degree reduction control portion 90), to implement the above-described rattling noise preventing control to shift the engine operating point from a point on the highest engine fuel economy line to a point on the rattling noise preventing operation line. SA30 is further formulated to perform a heavier filtering operation with respect to the above-indicated control M2 speed $N_{M2}A$ used for calculation of the filtered M2 speed $N_{M2}F$, than a filtering operation to be performed during the normal running of the vehicle. Therefore, the pulsation in the target M1 speed $N_{M1}*$ due to the pulsation in the rotation of the second electric motor MG2, is reduced and the pulsation in the first electric motor torque $T_{M1}$ is reduced. Accordingly, an increase of the rattling noise by the above-indicated feedback control can be reduced or prevented. Thus, as shown in Fig. 3 for example, the present example is configured such that the rattling noise preventing operation line is set closer to the highest fuel economy line, than in the prior art. In other words, the setting of the rattling noise preventing operation line closer to the highest fuel economy line makes it possible to adequately reduce or prevent the rattling noise. If a negative determination is obtained in the above-indicated SA20, on the other hand, the control flow goes to SA40 corresponding to the hybrid control portion 82, to maintain the engine operating point on the highest fuel economy line on which the target engine power $P_E*$ can be obtained, and a filtering operation as performed during the normal running of the vehicle is performed with respect to the above-indicated control M2 speed $N_{M2}A$, for calculation of the filtered M2 speed $N_{M2}F$.

As described above, the present example is configured to reduce the degree of change of the operating state of the first electric motor MG1 in the above-indicated feedback control where the second electric motor torque $T_{M2}$ is held within the rattling noise generation zone G, as compared with the degree of change where the second electric motor torque $T_{M2}$ is outside the rattling noise generation zone G, so that the present example permits reduction or prevention of the increase of the rattling noise by the above-indicated feedback control in which the rotary motion pulsation of the second electric motor MG2 is reflected on the operating state of the first electric motor MG1. Accordingly, the amount of shifting of the engine operating point from the highest fuel economy line (from the highest fuel economy point) for reducing the rattling noise can be reduced, as compared with the amount of shifting where the above-indicated control is not implemented. Namely, the engine operating point for reducing the rattling noise can be set closer to the highest fuel economy line. Thus, the feedback control of the operating state of the first electric motor MG1 on the basis of the second electric motor speed $N_{M2}$ can be implemented such that the increase of the rattling noise is reduced or prevented while the fuel economy is improved.

The present example is further configured to reduce the degree of change of the operating state of the first electric motor MG1 in the above-indicated feedback control, by implementing the heavier filtering operation with respect to the operating speed of the above-indicated control M2 speed $N_{M2}A$ used for calculation of the filtered M2 speed $N_{M2}F$, as compared with the filtering operation to be implemented during a normal running of the vehicle. Accordingly, the degree of change of the operating state of the first electric motor MG1 in the above-indicated feedback control can be stably reduced, so that the increase of the rattling noise can be more stably reduced or prevented.

The present example is also configured to implement the rattling noise preventing control to shift the operating point of the engine, where the second electric motor torque $T_{M2}$ is held within the rattling noise generation zone G, from the predetermined operating point to be set during the normal running of the vehicle in which the second electric motor torque $T_{M2}$ is outside the rattling noise generation zone G, to the predetermined rattling noise preventing operating point to be set for preventing the rattling noise, for example. This rattling noise preventing control is implemented while the degree of change of the operating state of the first electric motor MG1 in the above-indicated feedback control is reduced, so that the above-indicated predetermined rattling noise preventing operating point can be set close to the above-indicated predetermined operating point lying on the highest fuel economy line, whereby the fuel economy can be improved. Accordingly, the amount of change of the engine speed $N_E$ during prevention of the rattling noise can be reduced, and the degree of uneasiness felt by the vehicle user (vehicle operator) about the change of the engine speed $N_E$ can be reduced.

The present example is further configured such that the above-indicated predetermined operating point of the engine is the point (e.g., engine operating point E1 indicated in Fig. 3) which lies on the memory-stored predetermined highest fuel economy line indicated by the solid line in Fig. 3 by way of example and at which the engine power $P_E^*$ can be obtained, while the above-indicated predetermined teeth butting noise preventing operating point of the engine is the point (e.g., engine operating point E3 indicated in Fig. 3) which lies on the memory-stored predetermined teeth butting noise preventing operation line indicated by the broken line in Fig. 3 by way of example and at which the target engine power $P_E^*$ can be obtained. Accordingly, the rattling noise preventing control is implemented while the degree of change of the operating state of the first electric motor MG1 in the above-indicated feedback control is reduced, so that the above-indicated predetermined rattling noise preventing operating point can be set close to the highest fuel economy line, whereby the fuel economy can be improved.

Other examples of this invention will be described next. It is to be understood that the same reference signs will be used to identify the corresponding elements in the different examples, which will not be described redundantly.

SECOND EXAMPLE

In the first example described above, the change degree reduction control portion 90 is configured to reduce the degree of change of the operating state of the first electric motor MG1 in the above-indicated feedback control, by implementing the heavier filter operation with respect to the above-described control M2 speed $N_{M2}A$ used for calculation of the filtered M2 speed $N_{M2}F$, as compared with the filtering operation implemented during the normal running of the vehicle. In the present example, however, the change degree reduction control portion 90 is configured to reduce the degree of change of the operating state of the first electric motor MG1 in the above-indicated feedback control, by using smaller gains in the above-indicated feedback control, as compared with gains used during the normal vehicle running, in place of, or in addition to the heavier filtering operation implemented in the preceding first example. For instance, the change degree reduction control portion 90 reduces the proportional gain KP and the integral gain KI in the above-indicated equation (1) used in the above-indicated feedback control to calculate the first electric motor torque $T_{M1}$, as compared with the values used during the normal vehicle running. The reduced values of those proportional and integral gains KP and KI are predetermined so as to reduce a degree of change of the first electric motor torque $T_{M1}$ with respect to the rotary motion pulsation of the second electric motor MG2, and stored in a memory.

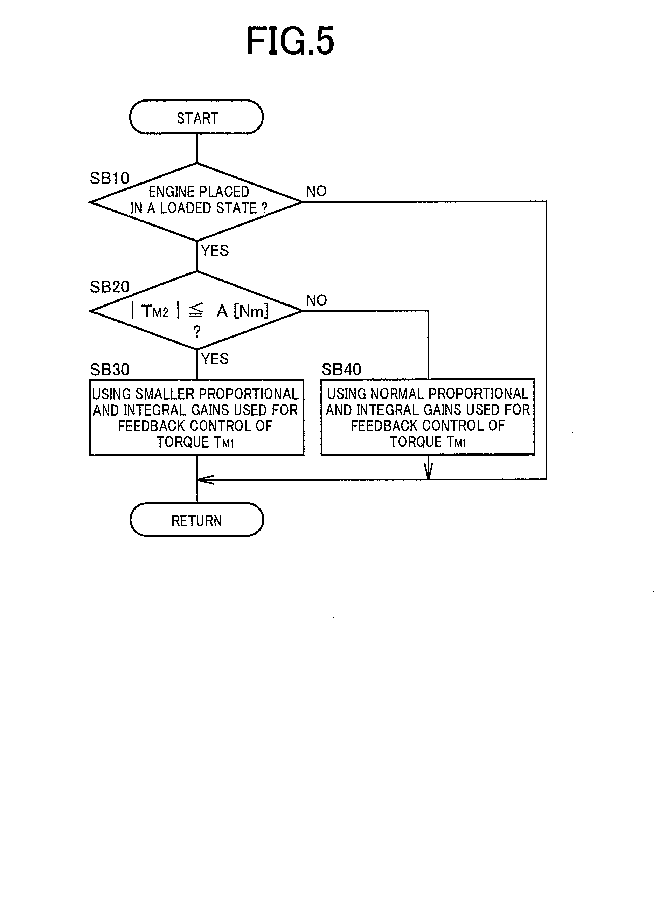

Fig. 5 is the flow chart illustrating a major control operation of the electronic control device 80, that is, a control operation to reduce or prevent the increase of the rattling noise and improve the fuel economy, which is performed for feedback control of the operating state of the first electric motor MG1 on the basis of the second electric motor speed $N_{M2}$. This control routine is repeatedly executed with an extremely short cycle time of about several milliseconds to about several tens of milliseconds. The flow chart of Fig. 5 illustrates the control operation performed in the present example, in place of the control operation illustrated in Fig. 4. It is noted that SB10 and SB20 in the flow chart of Fig. 5, which are identical with SA10 and SA20 in the flow chart of Fig. 4, will not be described redundantly.

If an affirmative determination is obtained in SB20 in Fig. 5, the control flow goes to SB30 corresponding to the hybrid control portion 82 (engine operating point shifting control portion 88, and change degree reduction control portion 90), to implement the above-described rattling noise preventing control to shift the engine operating point from a point on the highest engine fuel economy line to a point on the rattling noise preventing operation line. SB30 is further formulated to reduce the proportional gain KP and the integral gain KI in the above-indicated equation (1) used to calculate the first electric motor torque $T_{M1}$ in the above-indicated feedback control, as compared with the values used during the normal vehicle running. Accordingly, the degree of change of the first electric motor torque $T_{M1}$ with respect to the change of the target M1 speed $N_{M1}^*$ due to the rotary motion pulsation of the second electric motor MG2 can be reduced. Thus, the rattling noise can be reduced or avoided by the feedback control, the present example is configured such that the rattling noise preventing operation line is set closer to the highest fuel economy line, than in the prior art as shown in Fig. 3, for example. In other words, the setting of the rattling noise preventing operation line closer to the highest fuel economy line makes it possible to adequately reduce or prevent the rattling noise. If a negative determination is obtained in the above-indicated SB20, on the other hand, the control flow goes to SB40 corresponding to the hybrid control portion 82, to maintain the engine operating point on the highest fuel economy line on which the target engine power $P_E^*$ can be obtained, and the first electric motor torque $T_{M1}$ is calculated according to the above-indicated equation (1) which includes the proportional and integral gains KP and KI used during the normal vehicle running.

As described above, the present example is different from the preceding first example only in that in order to reduce the degree of change of the operating state of the first electric motor MG1 in the above-indicated feedback control, the gains used in the above-indicated feedback control are reduced as compared with those used during the normal vehicle running, in place of, or in addition to the implementation of the heavier filtering operation with respect to the above-indicated control M2 speed $N_{M2}A$ used for calculation of the filtered M2 speed $N_{M2}F$, as compared with the filtering operation implemented during the normal vehicle running. Thus, the same effect as in the preceding first example can be obtained.

THIRD EXAMPLE

In the preceding first example, the change degree reduction control portion 90 is configured to reduce the degree of change of the operating state of the first electric motor MG1 in the above-indicated feedback control, by implementing the heavier filter operation with respect to the above-described control M2 speed $N_{M2}A$ used for calculation of the filtered M2 speed $N_{M2}F$, as compared with the filtering operation implemented during the normal vehicle running. In the second example described above, the change degree reduction control portion 90 is configured to reduce the degree of change of the operating state of the first electric motor MG1 in the above-indicated feedback control, by reducing the gains used for the above-indicated feedback control, as compared with the values used during the normal vehicle running. In the present example, however, the change degree reduction control portion 90 is configured to reduce the degree of change of the operating state of the first electric motor MG1 in the above-indicated feedback control as compared to the normal vehicle running, by implementing the above-indicated feedback control on the basis of the output speed $N_{OUT}$ in place of the second electric motor speed $N_{M2}$, in place of, or in addition to the heavier filtering operation implemented in the preceding first example, or the use of the smaller gains in the preceding second example. For instance, the change degree reduction control portion 90 uses, as the rotating speed of the output gear 14 used for calculation of the target M1 speed $N_{M1}^*$, a filtered output speed $N_{OUT}$ (filtered output speed $N_{OUT}F$) calculated by implementing a predetermined filtering operation with respect to a control value (control output speed $N_{OUT}A$) which is a value obtained by a predetermined smoothing operation implemented with respect to the output speed $N_{OUT}$ detected by a sensor. This filtered output speed $N_{OUT}$ is used in place of the converted output speed $N_{OUT}$.

In the preceding first example, the output speed $N_{OUT}$ is likely to include a noise, particularly when the vehicle is running at a comparatively high speed. For this reason, the second electric motor speed $N_{M2}$ is used for calculation of the target M1 speed $N_{M1}^*$, as described above. Where the second electric motor torque $T_{M2}$ is held within the rattling noise generation zone G (namely, where $|T_{M2}| \leq$ rattling noise generation threshold value (A)), it is highly probable that the vehicle is running at a comparatively low speed, so that it is considered the output speed $N_{OUT}$ even if used for calculation of the target M1 speed $N_{M1}^*$ is not likely to include a noise. In the present example, therefore, the target M1 speed $N_{M1}^*$ is not calculated on the basis of the second electric motor speed $N_{M2}$ which changes with the rotary motion pulsation of the engine 12, but is calculated on the basis of the output speed $N_{OUT}$ which is less likely to be influenced by the rotary motion pulsation of the engine 12 than the second electric motor speed $N_{M2}$.

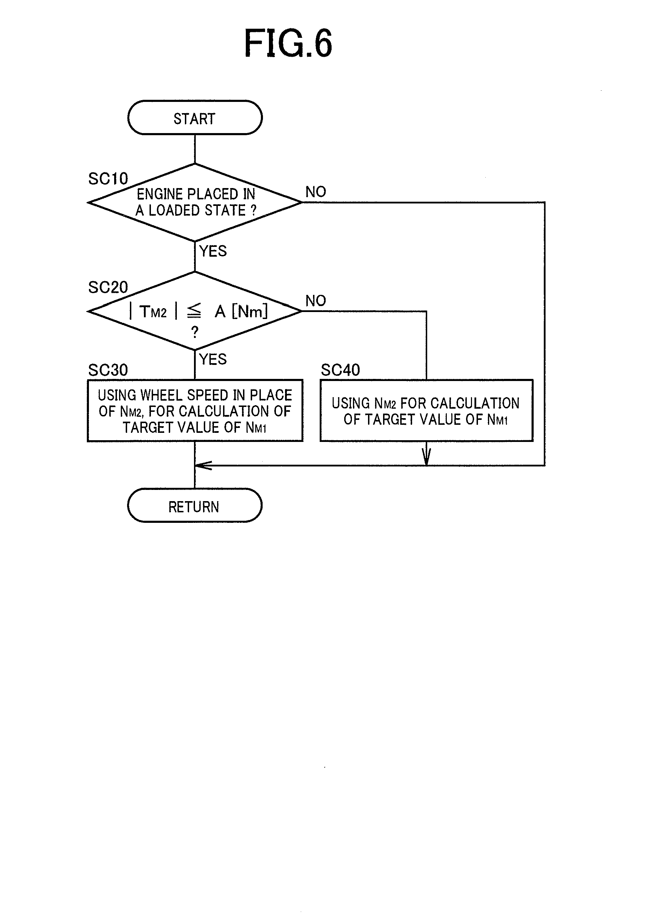

Fig. 6 is the flow chart illustrating a major control operation of the electronic control device 80, that is, a control operation to reduce or prevent the increase of the rattling noise and improve the fuel economy, which is performed for feedback control of the operating state of the first electric motor MG1 on the basis of the second electric motor speed $N_{M2}$. This control routine is repeatedly executed with an extremely short cycle time of about several milliseconds to about several tens of milliseconds. The flow chart of Fig. 6 illustrates the control operation performed in the present example, in place of the control operation illustrated in Fig. 4. It is noted that SC10 and SC20 in the flow chart of Fig. 6, which are identical with SA10 and SA20 in the flow chart of Fig. 4, will not be described redundantly.

If an affirmative determination is obtained in SC20 in Fig. 6, the control flow goes to SC30 corresponding to the hybrid control portion 82 (engine operating point shifting control portion 88, and change degree reduction control portion 90), to implement the above-described rattling noise preventing control to shift the engine operating point from a point on the highest engine fuel economy line to a point on the rattling noise preventing operation line. SC30 is further formulated to use, as the rotating speed of the output gear 14 to be employed for calculation of the target M1 speed $N_{M1}^*$, the filtered output speed $N_{OUT}F$ calculated on the basis of the output speed $N_{OUT}$ detected by the sensor, rather than the converted output speed $N_{OUT}$ calculated on the basis of the second electric motor speed $N_{M2}$. Accordingly, the target M1 speed $N_{M1}^*$ is calculated without an influence of the rotary motion pulsation of the second electric motor MG2 due to the rotary motion pulsation of the engine 12, so that the degree of change of the first electric motor torque $T_{M1}$ can be reduced. Thus, the present example is configured to reduce or prevent the increase of the rattling noise in the above-indicated feedback control, so that the above-indicated rattling noise preventing operation line is set closer to the highest fuel economy line, than in the prior art as shown in Fig. 3, for example. In other words, the setting of the rattling noise preventing operation line closer to the highest fuel economy line makes it possible to adequately reduce or prevent the rattling noise. If a negative determination is obtained in the above-indicated SC20, on the other hand, the control flow goes to SC40 corresponding to the hybrid control portion 82, to use the converted output speed $N_{OUT}$ calculated on the basis of the second electric motor speed $N_{M2}$, as the rotating speed of the output gear 14 to be employed for calculation of the target M1 speed $N_{M1}^*$ during the normal vehicle running.

As described above, the present example is different from the preceding first and second examples only in that in order to reduce the degree of change of the operating state of the first electric motor MG1 in the above-indicated feedback control, the feedback control is implemented on the basis of the output speed $N_{OUT}$ in place of the second electric motor speed $N_{M2}$, in place of the implementation of the heavier filtering operation with respect to the above-indicated control M2 speed $N_{M2}A$ used for calculation of the filtered M2 speed $N_{M2}F$, as compared with the filtering operation implemented during the normal vehicle running, or in place of, or in addition to the use of the smaller gains for the above-indicated feedback control, as compared with the gains used during the normal vehicle running. Thus, the same effect as the preceding first and second examples can be obtained.

While the examples of this invention have been described in detail by reference to the drawings, it is to be understood that the illustrated examples may be combined together, and that the invention may be otherwise embodied.

In the vehicle 10 according to the illustrated examples, the second electric motor MG2 is connected to the output gear 14 indirectly via the gear mechanism 18. However, the principle of this invention is equally applicable to a vehicle of any other arrangement. For instance, the present invention is applicable to a vehicle in which the second electric motor MG2 is connected directly to the output gear 14, or a vehicle in which the second electric motor MG2 is connected to a rotary member disposed between the output gear 14 and the drive wheels 38, and is thus operatively connected indirectly to the output gear 14.

Although the power distributing mechanism 16 in the illustrated examples is a planetary gear set of a single-pinion type, the power distributing mechanism 16 may be a planetary gear set of a double-pinion type. Alternatively, the power distributing mechanism 16 may be a differential gear device wherein a pinion rotated by the engine 12, and a pair of bevel gears meshing with the pinion are operatively connected to the first electric motor MG1 and the output gear 14.

In the illustrated examples, the power distributing mechanism 16 is a differential mechanism provided with one planetary gear set having three rotary elements. However, the power distributing mechanism 16 is not limited to this type of differential mechanism. For instance, the power distributing mechanism 16 may be constituted by two planetary gear sets which are connected to each other so as to constitute a differential mechanism.

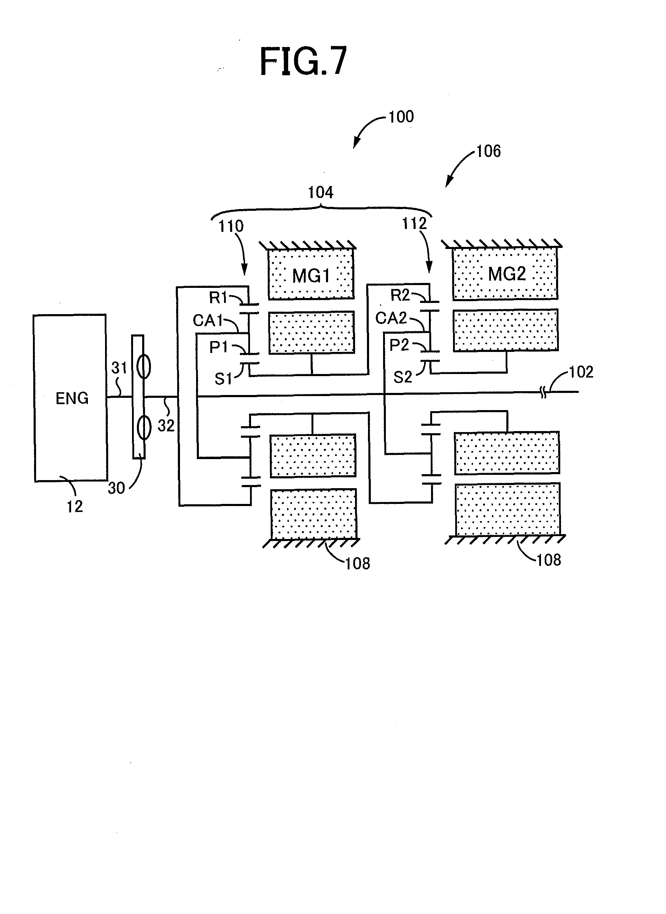

Fig. 7 is the view showing an example of a hybrid vehicle 100 provided with a power distributing mechanism provided with two planetary gear sets which cooperate to constitute a differential mechanism. As shown in Fig. 7, the hybrid vehicle 100 is provided with a power distributing mechanism 104 configured to distribute the drive force of the engine 12 to the first electric motor MG1 and an output shaft 102, and a transmission portion 106 disposed with the second electric motor MG2 operatively connected to the output shaft 102 which serves as an output rotary element. The transmission portion 106 is equitably used for the hybrid vehicle 100 of a longitudinal FR (front-engine rear-drive) type, for instance, and constitutes a part of a power transmitting device disposed within a stationary member in the form of a casing 108 attached to the body of the vehicle. In this transmission portion 106, the drive force of the engine 12 is transmitted from the output shaft 102 to the drive wheels through a differential gear device, axles, etc. not shown, in the order of description. The power distributing mechanism 104 is provided with a known first planetary gear set 110 of a single-pinion type having rotary elements consisting of a first sun gear S1, a first pinion gear P1, a first carrier CA1 and a first ring gear R1, and a known second planetary gear set 112 of a single-pinion type, having rotary elements consisting of a second sun gear S2, a second pinion gear P2, a second carrier CA2 and a second ring gear R2. Described more specifically, the power distributing mechanism 104 has four rotary elements consisting of: a first rotary element RE1 constituted by the first sun gear S1 and the second ring gear R2 connected to each other, a second rotary element RE2 constituted by the first carrier CA1 and the second carrier CA2 connected to each other; a third rotary element RE3 constituted by the first ring gear R1; and a fourth rotary element RE4 constituted by the second sun gear S2. The power distributing mechanism 104 as a whole functions as a differential mechanism operable to perform a differential function. In this power distributing mechanism 104, the first electric motor MG1 is connected to the first rotary element RE1 while the output shaft 102 is connected to the second rotary element RE2. Further, the input shaft 32, namely, the engine 12 is connected to the third rotary element RE3, while the second electric motor MG2 is connected to the fourth rotary element RE4. Accordingly, the transmission portion 106 functions as an electrically controlled differential portion the differential state of which is controlled by controlling the operating state of the first electric motor MG1. It is noted that the transmission portion 106 is configured such that the differential state of the power distributing mechanism 104 is controllable by controlling the operating state of at least one of the first and second electric motors MG1 and MG2. Each of the first planetary gear set 110 and the second planetary gear set 112 may be of a double-pinion type.

Although the illustrated examples are configured to implement the rattling noise preventing control to shift the engine operating point from the highest fuel economy line to the rattling noise preventing operation line, this rattling noise preventing control need not be implemented. For example, the rattling noise can be reduced to some extent, only by reducing the degree of change of the operating state of the first electric motor MG1 in the above-indicated feedback control. Where the generation of the rattling noise can be prevented only by reducing the degree of change of the operating state of the first electric motor MG1 in the feedback control, it is not necessary to implement the rattling noise preventing control.

While the above-indicated rattling noise generation threshold values (A)[Nm] used for determining whether the second electric motor torque $T_{M2}$ is held within the rattling noise generation zone G are constant values in the illustrated examples, these threshold values may be variable by a hysteresis value determined depending upon the direction of change of the second electric motor torque $T_{M2}$.

In the illustrated examples, the degree of change of the operating state of the first electric motor MG1 in the above-indicated feedback control is reduced by a predetermined constant amount where it is determined that the second electric motor torque $T_{M2}$ is held within the rattling noise generation zone G. However, the degree of change of the operating state of the first electric motor MG1 in the above-indicated feedback control may be reduced by an amount which increases with a decrease of the second electric motor torque $T_{M2}$ toward zero, since the amount of generation of the rattling noise is maximum when the second electric motor torque $T_{M2}$ is zero within the rattling noise generation zone G.

While the examples of this invention have been described for illustrative purpose only, it is to be understood that the invention may be embodied with various changes and improvements which may occur to those skilled in the art.

NOMENCLATURE OF REFERENCE SIGNS

> 10, 100: Hybrid vehicle
> 12: Engine
> 14: Output gear (Output rotary element)
> 16: Power distributing mechanism (Differential mechanism)
> 20: Transmission portion (Electrically controlled differential portion)
> 80: Electronic control device (Control device)
> 102: Output shaft (Output rotary element)
> 104: Power distributing mechanism (Differential mechanism)
> 106: Transmission portion (Electrically controlled differential portion)
> MG1: First electric motor
> MG2: Second electric motor

**Claims**

1. A control device for a hybrid vehicle provided with an electrically controlled differential portion which has a differential mechanism configured to distribute a drive force of an engine to a first electric motor and an output rotary element, and a second electric motor operatively connected to said output rotary element, and a differential state of the differential mechanism being controlled by a feedback control of an operating state of said first electric motor on the basis of an operating speed of said second electric motor, the control device being **characterized by**:

   reducing a degree of change of the operating state of said first electric motor in said feedback control where an output torque of said second electric motor is held within a zone predetermined as a range of the output torque of said second electric motor, as compared with a degree of change where the output torque of said second electric motor is outside said zone.

2. The control device according to claim 1, **characterized in that** the degree of change of the operating state of said first electric motor in said feedback control is reduced by at least one of: reducing a gain used for said feedback control; implementing a heavier filtering operation with respect to the operating speed of said second electric motor; and implementing said feedback control on the basis of a value relating to a rotating speed of said output rotary element, in place of the operating speed of said second electric motor.

3. The control device according to claim 1 or 2, **characterized by** implementing a teeth butting noise preventing control to shift an operating point of the engine, where the output torque of said second electric motor is held within said zone, from a predetermined operating point to be set where the output torque of said second electric motor is outside said zone, to a predetermined teeth butting noise preventing operating point to be set for preventing a teeth butting noise.

4. The control device according to claim 3, **characterized in that** said predetermined operating point of the engine is a point which lies on a memory-stored predetermined highest fuel economy line and at which a target value of power of the engine can be obtained, while said predetermined teeth butting noise preventing operating point of the engine is a point which lies on a memory-stored predetermined teeth butting noise preventing operation line to prevent generation of said teeth butting noise and at which the target value of power of the engine can be obtained.

5. The control device according to any one of claims 1-4, **characterized in that** said zone is a teeth butting noise generation zone in which a teeth butting noise is likely to be generated in said electrically controlled differential portion due to a rotary motion pulsation of said engine and defined as a range of the output torque of the second electric motor.

# FIG.1

# FIG.2

# FIG.3

ISO-POWER LINES

HIGHEST ENGINE FUEL ECONOMY LINE

SHIFTING ENGINE
OPERATING POINT ALONG
AN ISO-POWER LINE

E1

E2

E3

RATTLING NOISE PREVENTING
OPERATION LINE
(IN THE EMBODIMENT)

RATTLINING NOISE
PREVENTING OPEATION LINE
(IN THE PRIOR ART)

ENGINE TORQUE T$_E$

0

ENGINE SPEED N$_E$

# FIG.4

START

SA10 ENGINE PLACED IN A LOADED STATE ? — NO

YES

SA20 $|T_{M2}| \leqq A$ [Nm] ? — NO

YES

SA30
HEAVY FILTERING OF $N_{M2}$ USED FOR CALCULATION OF TARGET VALUE OF $N_{M1}$

SA40
NORMAL FILTERING OF $N_{M2}$ USED FOR CALCULATION OF TARGET VALUE OF $N_{M1}$

RETURN

# FIG.5

START

SB10
ENGINE PLACED IN A LOADED STATE ?  NO

YES

SB20
$| T_{M2} | \leqq A$ [Nm] ?  NO

YES

SB30
USING SMALLER PROPORTIONAL AND INTEGRAL GAINS USED FOR FEEDBACK CONTROL OF TORQUE $T_{M1}$

SB40
USING NORMAL PROPORTIONAL AND INTEGRAL GAINS USED FOR FEEDBACK CONTROL OF TORQUE $T_{M1}$

RETURN

19

# FIG.6

START

SC10
ENGINE PLACED IN
A LOADED STATE ?  —— NO

YES

SC20
$| T_{M2} | \leqq A$ [Nm] —— NO
?

YES

SC30
USING WHEEL SPEED IN PLACE
OF $N_{M2}$, FOR CALCULATION OF
TARGET VALUE OF $N_{M1}$

SC40
USING $N_{M2}$ FOR CALCULATION
OF TARGET VALUE OF $N_{M1}$

RETURN

# FIG.7

## INTERNATIONAL SEARCH REPORT

| | International application No. |
|---|---|
| | PCT/JP2011/073141 |

**A. CLASSIFICATION OF SUBJECT MATTER**
*B60W10/08*(2006.01)i, *B60K6/445*(2007.10)i, *B60W20/00*(2006.01)i

According to International Patent Classification (IPC) or to both national classification and IPC

**B. FIELDS SEARCHED**

Minimum documentation searched (classification system followed by classification symbols)
B60W10/08, B60K6/445, B60W20/00

Documentation searched other than minimum documentation to the extent that such documents are included in the fields searched
Jitsuyo Shinan Koho      1922-1996   Jitsuyo Shinan Toroku Koho   1996-2011
Kokai Jitsuyo Shinan Koho  1971-2011   Toroku Jitsuyo Shinan Koho   1994-2011

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2010-284991 A  (Toyota Motor Corp.), 24 December 2010 (24.12.2010), abstract & WO 2010/143030 A1 | 1-5 |
| A | JP 2007-210409 A  (Toyota Motor Corp.), 23 August 2007 (23.08.2007), abstract (Family: none) | 1-5 |

☐ Further documents are listed in the continuation of Box C.        ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04 November, 2011 (04.11.11) | 15 November, 2011 (15.11.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

22

**EP 2 765 043 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11093725 A